# EUROPEAN PATENT APPLICATION

(11) **EP 1 563 935 A2**
(43) Date of publication of application: **17.08.2005**
(21) Application number: 05250756.3
(22) Date of filing: 10.02.2005
(51) Int. Cl.: B23B 31/00

(54) **Spindle structure of a machine tool**

(30) Priority: 10.02.2004 JP 2004033159
(71) Applicant: FANUC LTD, Minamitsuru-gun, Yamanashi 401-0597 (JP)
(72) Inventor: Watanabe, Norio, Fujiyoshida-shi yamanashi 403-0004 (JP); Fujimoto, Akihiko Room6-109, FANUC, Manamitsuru-gun Yamanashi 401-0511 (JP); Murota, Masahiro Room14-508, FANUC, Minamitsuru-gun Yamanashi 401-0511 (JP)
(74) Representative: Billington, Lawrence Emlyn

(57) **Abstract**

A tool holder (1) is attached to a spindle (2) by the contacting of the projecting cone part (3) and end surface of the tool holder with the recessed cone part and end surface of the spindle respectively. A toroidal cone section (7) is provided on the inner side surface of the recessed cone part of the spindle so as to protrude inward. The diameter of the toroidal cone section is formed smaller than the diameter of the section of the projecting cone part of the tool holder that abuts the toroidal cone section.

## Description

### BACKGROUND OF THE INVENTION

### 1. Field of the Invention

The present invention relates to a spindle structure of a machine tool in which a tool holder is supported by, and removable from, the spindle.

### 2. Description of the Related Art

In the connecting of a tool holder on which a tool such as a cutting tool is mounted to the spindle of a machine tool, first, a projecting cone part provided in the end surface of the tool holder is fitted into a recessed cone part formed in the tip-end part of the spindle. Thereafter, using a drawbar arranged in the spindle side, a pull stud provided in the apex part of the projecting cone part (tapered surface) of the tool holder is drawn up so as to bring the recessed cone part of the spindle into contact with the projecting cone part (tapered surface) of the tool holder of the tool holder.

However, there are drawbacks inherent to structures in which the tool holder and the spindle are coupled by contact between the tapered surfaces in this way in that the tool holder is liable to incline significantly when an external force is applied thereto and, in addition, in that dispersion in tool lengthes is increased at the changeover of tools and, furthermore, in that the recessed cone part expands when the spindle is rotated at high speed, with the result that the tool holder is pulled into the spindle.

Thereupon, in recent years a spindle structure comprising a dual-surface shackling system in which a tool holder is connected to a spindle by not only the contact between the tapered surface of the tool holder and the tapered surface of the spindle but also the contact between the end surface of the tool holder and the end surface of the spindle has been adopted. The use of this system eliminates the above-described drawbacks and affords processing with the tool of a higher grade.

In a well-known spindle structure of a dual-surface shackling system the projecting cone part of a tool holder is fitted into the recessed cone part of a spindle and both the end surface of the spindle and the end surface of the tool holder are extended to be brought into contact with each other (see Japanese Patent Application Laid-open No. 5-285715).

In this structure, the interference is established in advance by the forming of the outer diameter of the projecting cone part larger than the inner diameter of the recessed cone part and, in the pulling of the tool holder into the spindle, the elastic deformability of both the spindle and the tool holder by the tool clamping force is utilized to bring the end surfaces into close contact. The greater the tool clamping force the greater the extent to which the tool holder is pulled into the spindle.

However, with consideration to the strength of the pull stud and the load on the unclamp mechanism, the tool clamping force cannot be excessively enlarged. For this reason, in order that the tapered surfaces and the end surfaces firmly adhere to each other simultaneously, the tapered surface and the end surface in a spindle must be rigidly finished to within a very narrow range of error, as a result, the costs for manufacturing such a spindle are very high.

In addition, because a floating state is generated between the tapered surfaces of the spindle and the tool holder as a result of the use of an oil film interposed there-between, sufficient transfer torque cannot be produced and, as a result, the machining potential cannot be fully demonstrated.

Furthermore, when the spindle is rotated at high speed, the recessed cone part of the spindle expands outwardly in the radial direction due to the centrifugal force. Because the degree of this expansion is greater than the degree of expansion of the projecting cone part of the tool holder, the holding state of the tool becomes unstable.

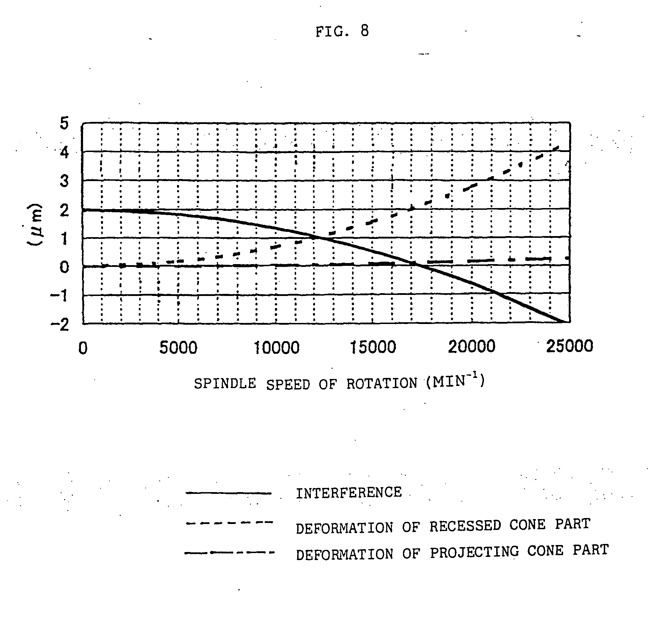

FIG. 8 shows the deformation (expansion) of the projecting cone part and recessed cone part that occurs accompanying changes in the speed of rotation of the spindle, and it is clear from this that, if a 2µm interference (difference between the outer diameter of the projecting cone part and the inner diameter of the recessed cone part) is established in advance when the spindle is stopped, the interference decreases accompanying the increase in the speed of rotation of the spindle and gap is formed between the two parts when a speed of rotation of approximately 17,000min⁻¹ is exceeded.

In another well-known dual-surface shackling type spindle structure, by interposing a sleeve-shaped movable part between the tapered surface of a tool holder and the tapered surface of a spindle, the tool pull-in amount is increased with respect to the tool pull-in force and designed to follow the deformation that occurs at times of high speed rotation (Japanese Patent Application Laid-open No. 2000-158270, Japanese Patent Application Laid-open No. 2002-172534, Japanese Utility Model Application Laid-open No. 60-143628)

However, there are drawbacks inherent to the use of these structures in that, because of the low transmission torque between a spindle and a tool holder, the performance of a tool is unable to be fully demonstrated and, in addition, in that the costs thereof are high because of the complexity of the structures.

### SUMMARY OF THE INVENTION

In the spindle structure of a machine tool according to the present invention, in which the projecting cone part and the end surface of a tool holder are brought into contact with and separated from a recessed cone part and the end surface of a spindle so that the abovementioned tool holder is supported by and removable from the abovementioned spindle, a toroidal cone section is integrally provided in one or more locations of the abovementioned recessed cone part of the spindle in the axial direction of the spindle, and the diameter of said toroidal cone section is formed smaller than the diameter of the section of the projecting cone part of the abovementioned tool holder that abuts the abovementioned toroidal cone section.

According to the present invention, a tool holder and a spindle can be stably shackled by means of the tapered surfaces and the end surfaces without need for the provision of a movable part or the implementation of a rigid processing accuracy and, in addition, a high transfer torque can be produced, and the tool can be held stably.

According to the spindle structure of a machine tool of the present invention, by localizing the contact between the tapered surfaces to the toroidal cone section, the sections of contact can be easily elastically deformed so that, after the tapered surfaces of the tool holder and spindle are brought into contact, the tool holder can be fully pulled in whereby, accordingly, a stable dual-surface shackled state is able to be produced, the range of the permissible error of the positional relationship between the tapered surface and the end surface of the spindle can be increased and, in addition, because of the lowering of the demanded processing accuracy, the manufacturing costs can be suppressed.

In addition, by virtue of the fact that the interference between the tool holder and the spindle can be set larger so as to increase the surface pressure generated in the tapered surfaces and, in addition, there is no floating state generated due to the interposing of an oil film because the contact surface area between the tapered surfaces is narrowed, a high transfer torque can be produced between the spindle and the tool holder.

Furthermore, as a result of the increased interference established in advance, loss of interference is eliminated and the tool can continue to be held in a stable state even if the recessed cone part of the spindle expands during high-speed rotation of the spindle.

### BRIEF DESCRIPTION OF THE DRAWINGS

The above-described objects and features, along with other objects and features of the present invention, are apparent from the following description of the embodiments thereof given with reference to the accompanying drawings. Of these diagrams:
FIG. 1 is a cross section of a first embodiment of the spindle structure of a machine tool according to the present invention;
FIG. 2 is a cross section for explaining, in the spindle structure of a machine tool of FIG. 1, the establishing of interference by the formation of the diameter of the toroidal cone section formed in the recessed cone part of the spindle slightly smaller than the diameter of the area of the projecting cone part of the tool holder that abuts the abovementioned toroidal cone section;
FIG. 3 is a table illustrating a comparison between the spindle structure of the prior art and the spindle structure of FIG. 1 of the tool pull-in amount with respect to the tool pull-in force, the interference, and the tolerance width;
FIG. 4A is a diagram showing the distribution state of the surface pressure of the spindle structure of the prior art, and FIG. 4B is a diagram showing the distribution state of the surface pressure of the spindle structure of FIG. 1;
FIG. 5 is a cross section of a second embodiment of the spindle structure of a machine tool according to the present invention;
FIG. 6 is a cross section of a third embodiment of the spindle structure of a machine tool according to the present invention;
FIG. 7 is a cross section of a fourth embodiment of the spindle structure of a machine tool according to the present invention; and
FIG. 8 is a graph illustrating the deformation of the projecting cone part and the recessed cone part of the spindle structure of the prior art accompanying changes in the speed of rotation of the spindle.

### DESCRIPTION OF THE PREFERRED EMBODIMENTS

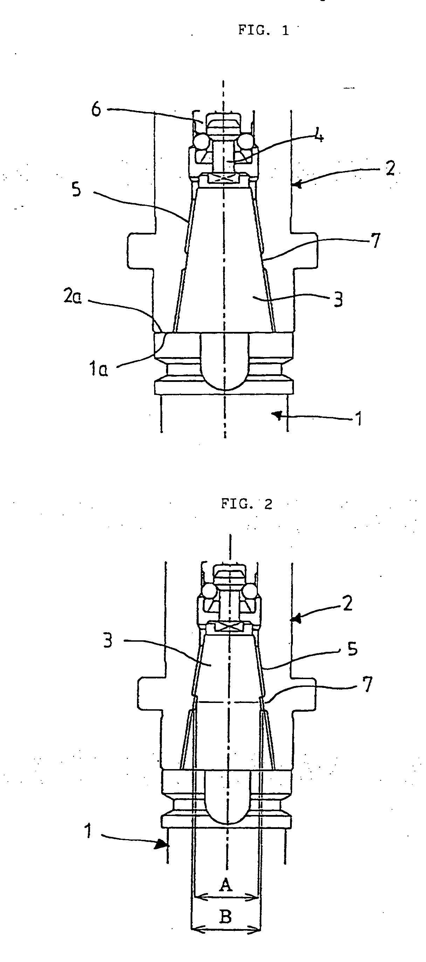

A description of a first embodiment of the spindle structure of a machine tool according to the present invention is given below with reference to FIG. 1.

In the spindle structure shown in FIG. 1, a tool is connected to the spindle 2 and the work of the spindle 2 is transferred to the tool by the attachment to the spindle 2 of a tool holder 1 on which a tool (not shown) such as a cutting tool is mounted.

A projecting cone part 3 is integrally provided in the center part of the end surface 1a of the tool holder 1 in such a way that the axis thereof aligns with the axis of the tool holder 1. A pull stud 4 is provided upright in the apex part of the projecting cone part 3 along the axial direction of the projecting cone part 3.

A recessed cone part 5 is formed in the center part of the end surface 2a of the spindle 2 in such a way that the axis thereof aligns with the axis of the spindle 2. A draw bar 6 which detachably grasps the pull stud 4 of the tool holder 1 is arranged in the base part of the recessed cone part 5. In addition, a toroidal cone section 7 is integrally formed in the center position of the recessed cone part 5 in the axial direction of the spindle. The toroidal cone section 7 is composed of a protruding portion that protrudes inward from the surface of the recessed cone part 5, and the inner circumferential surface of the protruding portion thereof forms a cone shaped surface (tapered surface) parallel with the surface of the recessed cone part 5.

The projecting cone part 3 of the tool holder 1 is inserted in the recessed cone part 5 of the spindle 2 and, after it is brought into contact with the tapered surface of the toroidal cone section 7 and the pull stud 4 of the tool holder 1 is pulled up by the draw bar 6, the end surface 1a of the tool holder 1 and the end surface 2a of the spindle 2 adhere to each other firmly.

It should be noted that, as shown in FIG. 2, the interference is established by the forming of the diameter (inner diameter) A of the toroidal cone section 7 formed in the recessed cone part 5 slightly smaller than the diameter (outer diameter) B of the area of the projecting cone part 3 that abuts the abovementioned toroidal cone section 7. When the tool holder 1 is pulled into the spindle 2 side (that is to say, when the pull stud 4 is pulled up by the draw bar 6), the projecting cone part 3 and recessed cone part 5 are elastically deformed so that the projecting cone part 3 (tapered surface) firmly adheres to the inner circumferential surface (tapered surface) of the toroidal cone section 7.

Because the contact between the tapered surface of the tool holder 1 (projecting cone part 3) and the tapered surface of the spindle 2 (inner circumferential surface of the toroidal cone section 7) is localized in this way they are able to be easily elastically deformed. For this reason, the tool pull-in amount that occurs at a given tool pull-in force can be increased, compared with the structure of the prior art in which the whole of the tapered surface of the projecting cone part and the whole of the tapered surface of the recessed cone part are in contact. As a result, a mode in which the interference (difference between the diameter B of the projecting cone part 3 and the diameter A of the toroidal cone section 7) established in advance is increased can be adopted.

Accordingly, the range of permissible error, or the tolerance width, of the positional relationship in the axial direction between the recessed cone part 5 (tapered surface) and the end surface 2a of the spindle 2 can be widened and the demanded processing accuracy is lowered, compared with the structure of the prior art.

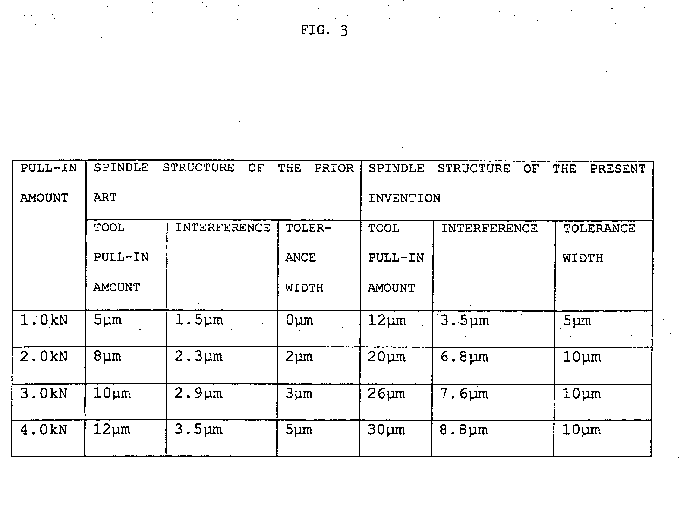

FIG. 3 shows the results of a comparison between the spindle structure according to the present invention and the spindle structure of the prior art, regarding a tool pull-in amount of the tool holder into the spindle interior after contact of the tapered surfaces, the interference that can be established in advance, and the tolerance width, with respect to a tool pull-in force.

For example, under a tool pull-in force of 2.0kN, the tool pull-in amount in the spindle structure according to the present invention is 20µm, while the tool pull-in amount in the spindle structure of the prior art is only 8µm. Accordingly, as a large pull-in amount is obtainable in the case of the present invention in this way, the tolerance width of the spindle structure according to the present invention is 10µm, 5 times larger than that of the prior art which is 2µm.

In addition, as the contact surface area of the tapered surface of the spindle 2 (inner circumferential surface of the toroidal cone section 7) is small, there is no floating state generated by an oil film interposed in the contact part between the tapered surfaces. Moreover, as the other sections of the recessed cone part 5 do not come into contact with the projecting cone part 3, an oil film interposed in this section does not have any effect on transfer torque and, accordingly, a high transfer torque can be obtained.

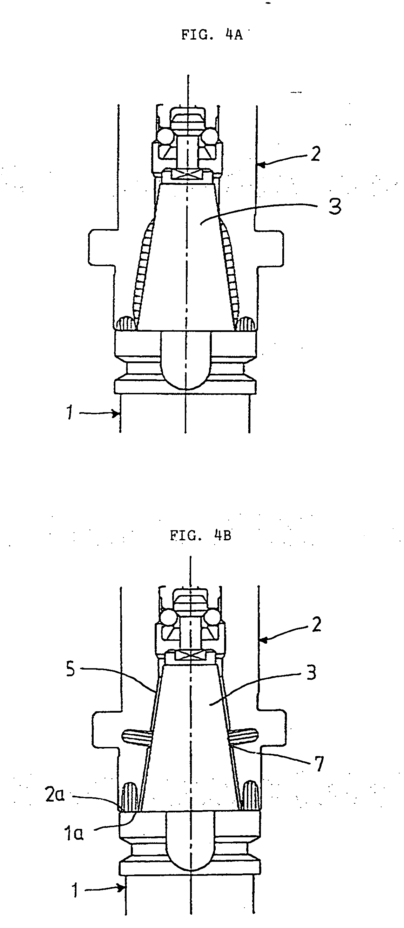

FIG. 4A and FIG. 4B shows the results of a comparison between the spindle structure according to the present invention and the spindle structure of the prior art, regarding the pressure applied to the tapered surface and the end surface, in the state in which the tool holder is mounted on the spindle.

In the spindle structure of the dual-surface shackling system of the prior art shown in FIG. 4A, because the recessed cone part of the spindle and the projecting cone part of the tool holder adhere firmly to each other across the entire surface, a low surface pressure acts on the coupling surface as a whole. On the other hand, in the spindle structure according to the present invention shown in FIG. 4B, a high surface pressure is concentrated on the inner circumferential surface of the toroidal cone section 7.

It should be noted that an exchange relationship exists between the surface pressure generated in the tapered surface and the surface pressure generated in the end surface, but, in the case where the surface pressure generated in the tapered surface is sufficiently high, the surface pressure acting on the end surface can be raised by adjusting the amount of interference to be established in advance for the balanced distribution between those surface pressures.

A variety of modifications may be made to the spindle structure shown in FIG. 1.

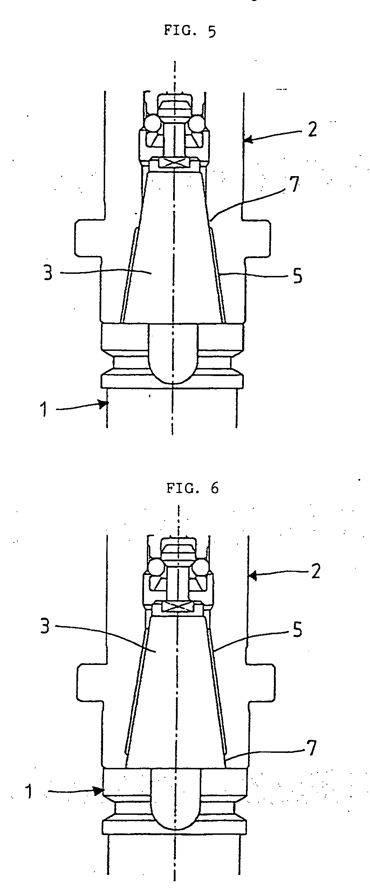

By way of example, in the embodiment shown in FIG. 5 (a second embodiment of the spindle structure of the machine tool according to the present invention), the toroidal cone section 7 is formed in the recessed cone part 5 at an upper portion thereof in the axial direction of the spindle.

In the embodiment shown in FIG. 6 (a third embodiment of the spindle structure of the machine tool according to the present invention), the toroidal cone section 7 is formed in the recessed cone part 5 at a lower end portion thereof in the axial direction of the spindle.

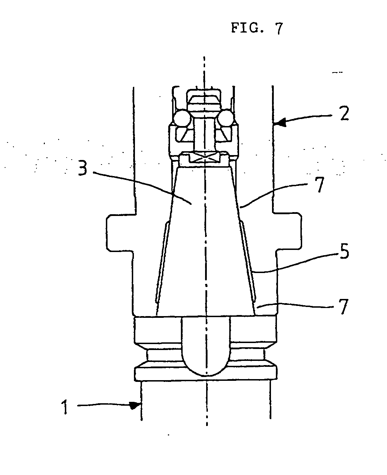

In addition, in the embodiment shown in FIG 7 (a fourth embodiment of the spindle structure of the machine tool according to the present invention), the toroidal cone sections 7 are formed in the recessed cone part 5 both at an upper portion and lower end portion thereof in the axial direction of the spindle.

Furthermore, the same effect can be obtained if a toroidal cone section 7 is provided in the outer circumferential surface of the projecting cone part 3 of the tool holder 1, not on the main surface shaft 2 side. That is to say, the toroidal cone section can be integrally provided in one or more locations in the axial direction of the projecting cone part of the tool holder 1 and, in addition, the diameter of the toroidal cone section thereof can be formed larger than the section of the recessed cone part 5 of the spindle 2 that abuts the toroidal cone section.

## Claims

1. A spindle structure of a machine tool in which the projecting cone part and the end surface of a tool holder are brought into contact with, and separated from, the recessed cone part and the end surface of a spindle, respectively, so that said tool holder is supported by and removable from said spindle,
wherein a toroidal cone section is integrally provided in one or more locations of the recessed cone part of said spindle in the axial direction of the spindle,
and the diameter of said toroidal cone section is formed smaller than the diameter of the section of the projecting cone part of said tool holder that abuts said toroidal cone section.

2. A spindle structure of a machine tool in which the projecting cone part and the end surface of a tool holder are brought into contact with, and separated from, the recessed cone part and the end surface of a spindle, respectively, so that said tool holder is supported by and removable from said spindle,
wherein a toroidal cone section is integrally provided in one or more locations of the projecting cone part of said spindle in the axial direction of the spindle,
and the diameter of said toroidal cone section is formed greater than the diameter of the section of the recessed cone part of said spindle that abuts said toroidal cone section.
